**Europäisches Patentamt**

**European Patent Office**

**Office européen des brevets**

(19)

(11) Numéro de publication: **0 146 503 B1**

(12)

# FASCICULE DE BREVET EUROPEEN

(45) Date de publication du fascicule du brevet:
**19.11.87**

(21) Numéro de dépôt: **84810585.4**

(22) Date de dépôt: **30.11.84**

(51) Int. Cl.⁴: **B 65 D 53/04,** B 32 B 27/32, B 32 B 31/20

(54) **Matériau stratifié, procédé du fabrication d'un matériau stratifié et installation pour la mise en oeuvre de ce procédé.**

(30) Priorité: **05.12.83 FR 8319382**

(43) Date de publication de la demande:
**26.06.85 Bulletin 85/26**

(45) Mention de la délivrance du brevet:
**19.11.87 Bulletin 87/47**

(84) Etats contractants désignés:
**DE FR GB**

(56) Documents cités:
**FR - A - 1 282 641**
**FR - A - 2 362 771**
**FR - A - 2 445 474**
**US - A - 4 008 347**

(73) Titulaire: **MANUFACTURE GENERALE DE JOINTS, Chazay d'Azergues, F-69380 Lozanne (FR)**

(72) Inventeur: **Vial, Armand, Les Perrières Chazay d'Azergues, F-69380 Lozanne (FR)**

(74) Mandataire: **Dousse, Blasco et al, 7, route de Drize, CH-1227 Carouge/Genève (CH)**

ACTORUM AG

## Description

La présente invention se rapporte à un matériau stratifié, notamment pour réaliser un joint plat destiné à être appliqué contre l'extrémité du goulot d'un récipient comprenant trois couches, soit une couche de polyéthylène expansé prise entre deux films d'un matériau thermoplastique thermi-soudable sur le polyéthylène, à un procédé de fabrication d'un matériau stratifié et à une installation pour la mise en oeuvre de ce procédé.

Il existe déjà de tels joints plats utilisés pour la fermeture étanche de récipients en association avec des bouchons à vis ou des capsules. Ces joints sont réalisés par co-extrusion d'une couche de polyéthylène expansé et de deux films de polyéthylène extrudés de part et d'autre de la couche de polyéthylène expansé, comme décrit par exemple dans le FR-A-2 445 474.

De tels joints présentent divers inconvénients. Tout d'abord, l'extrusion des films ne permet pas d'obtenir une surface très lisse. Celle-ci est au contraire relativement matte, caractéristique de micro-rugosités consécutives à l'extrusion du film. Ces micro-rugosités formées de lignes parallèles traversent le joint de part en part et peuvent de ce fait nuirent à l'étanchéité du joint. Les utilisateurs recherchent en général des joints dont les surfaces sont aussi lisses que possible, de sorte que de tels joints présentent une valeur marchande en partie fonction de ce critère.

Un autre inconvénient de ces joints réside dans le procédé de fabrication par co-extrusion, qui nécessite trois extrudeuses en parallèles représentant un investissement considérable.

En outre, cette techncique ne permet pas de contrôler avec précision l'épaisseur du film de polyéthylène extrudé de part et d'autre de la couche de polyéthylène expansé.

On a déjà proposé un collage, voire un thermo-collage d'un film de matière plastique sur de la mousse. C'est notamment le cas du FR-A-1 282 641 et du US-A-4 008 347. Le traitement thermique affecte la couche de colle placée entre les feuilles à coller de sorte que les feuilles extérieures fixées à la couche de mousse prise en sandwich n'est pas affectée par cette opération. Dans le cas du FR-A-1 282 641 il est cependant précisé que l'entraînement du matériau stratifié entre deux bandes sans fin est assuré grâce au coefficient de frottement superficiel suffisant de ces bandes. Il en résulte, même dans ce cas que l'état de surface des feuilles collées à la couche centrale de mousse sera éventuellement dégradé en cas de ramolissement des feuilles extérieures, par cet entraînement par frottement, qui suppose un état de surface relativement rugueux des bandes sans fin. Aucune des solutions proposées dans l'art antérieur ne permet d'obtenir un tel genre de stratifié avec un état de surface plus brillant que l'état initial de la feuille, en particulier un état de surface sur lequel les lignes d'extrusion de la feuille initiale ont disparu.

Le but de la présente invention est de remédier, au moins en partie, aux inconvénients susmentionnés.

A cet effet, cette invention a tout d'abord pour objet un matériau stratifié, notamment pour réaliser un joint plat destiné à être appliqué contre l'extrémité du goulot d'un récipient, comprenant au moins trois couches soit une couche de polyéthylène expansé prise entre deux films d'un matériau thermoplastique thermo-soudable sur le polyéthylène caractérisé par le fait que le rapport profondeur/longueur des irrégularités de surface est inférieur à 1/200.

Cette invention a également pour objet un procédé de fabrication d'un matériau stratifié, notamment pour réaliser un joint plat destiné à être appliqué contre l'extrémité du goulot d'un récipient, comprenant trous couches, à savoir un couche de polyéthylène expansé prise entre deux films d'un matériau thermoplastique soudable à couche avec le polyéthylène expansé, caractérisé par le fait que l'on forme ce stratifié en réunissant la couche de polyéthylène expansé entre lesdits films, que l'on chauffe ces films à leur température de ramollissement, que l'on presse le tout en le faisant défiler entre deux bandes présentant dans le sens longitudinal de leur défilement un gradient de température allant de la température de ramollissement desdites feuilles à leur température de solidification.

Enfin, cette invention a également pour objet une installation pour la mise en oeuvre de ce procédé caractérisé par le fait qu'elle comporte des moyens pour réunir et faire défiler longitudinalement un ruban stratifié comprenant un ruban de polyéthylène expansé entre deux films de matériau thermoplastique soudable à chaud avec le polyéthylène expansé, un poste de préchauffage desdits films, deux bandes métalliques sans fin montées chacune entre deux rouleaux et dont deux brins adjacents sont parallèles et situés le long de la trajectoire du ruban stratifié, les surfaces respectives externes de ces bandes métalliques sans fin présentant le degré de poli désiré pour les faces externes desdits films, des moyens de chauffage de chacun desdits rouleaux situés en amont par rapport au sens d'avance du ruban stratifié, et deux patins de refroidissement en contact avec une portion de chacun desdits brins adjacents des bandes métalliques sans fin.

Le dessin annexé illustre, schématiquement et à titre d'exemple uniquement, une forme d'exécution d'une installation pour la mise en oeuvre du procédé objet de l'invention.

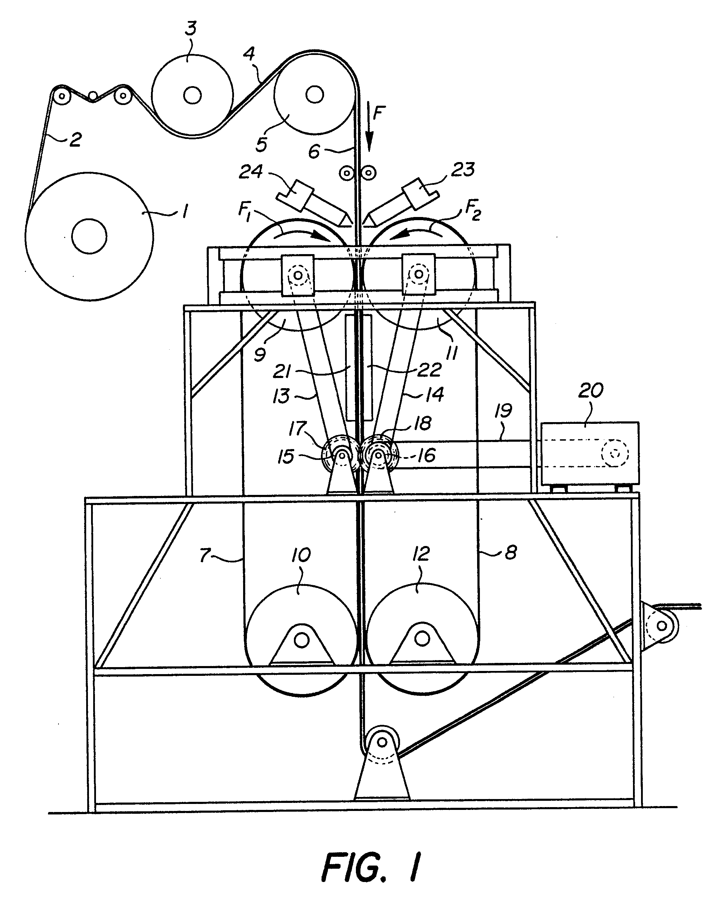

La fig. 1 est une vue en élévation de cette installation.

Les figures 2a à 2e sont des diagrammes comparatifs d'états de surfaces.

Cette installation comporte un premier rouleau 1 d'alimentation d'une feuille de polyéthylène expansé 2, un deuxième rouleau 3 d'alimentation d'un film de polyéthylène 4 disposé contre une face de la feuille 2 et un troisième rouleau 5 d'alimentation d'un autre film de polyéthylène 6 disposé contre l'autre face de la feuille 2.

Le stratifié formé de cette feuille 2 prise entre ces films 4 et 6 avance dans le sens de la flèche F et passe ensuite entre deux brins parallèles adjacents de deux bandes sans fin 7 et 8 en acier inoxydable, dont chacune est tendue entre deux rouleaux 9 et 10, respectivement 11 et 12. L'écartement entre ces brins est choisi pour comprimer les films 4 et 6 contre la couche 4. Les deux rouleaux 9 et 11 situés en amont par rapport à la trajectoire du stratifié sont chauffés intérieurement par de l'huile, afin de transmettre leur chaleur aux bandes sans fin 7 et 8. Ces rouleaux 9 et 11 sont entraînés en sens de rotations contraires $F_1$ respectivement $F_2$ par deux courroies de transmission 13, 14 en prise avec deux rouleaux 15 et 16 reliés entre eux par des renvois 17 et 18. Le rouleau 16 est, quant à lui, relié par une courroie de transmission 19 à moteur d'entraînement 20. Deux patins de refroidissement 21 et 22 sont appliqués au dos d'une portion de chacun des brins parallèles adjacents des bandes sans fin 7 et 8. Ces patins de refroidissement sont creux et alimentés par une circulation d'eau froide, la face en contact avec la bande sans fin étant en aluminium.

A la sortie des bandes sans fin 7 et 8, le stratifié est emmagasiné sur un rouleau de bobine, non représenté.

En amont des deux bandes sans fin 7 et 8 entre lesquelles passe le stratifié, deux buses de distribution d'air chaud 23 et 24 sont disposées de part et d'autre du stratifié et ont pour but de préchauffer les films de polyéthylène 4 et 6, avant qu'ils n'entrent en contact avec les brins parallèles adjacents des bandes sans fin 7 et 8.

Des joints plats stratifiés ont été réalisés avec l'installation décrite. Pour réaliser le préchauffage des films de polyéthylène de 0,1 mm d'épaisseur on a utilisé une soufflerie dont le débit est de 4700 l/min réparti entre les deux buses 23 et 24. Chacune de ces buses est associée à un chauffe air de 3 × 3300 W chacun.

La couche de polyéthylène expansé 2 prise en sandwich entre les fims 4 et 5 a une épaisseur comprise entre 0,1 et 0,25 mm environ. La largeur du stratifié est de 250 mm. Les rouleaux 9 et 11 sont chauffés à 110°C par l'huile qui est à l'intérieur de chacun d'eux et qui correspond à la température de ramollissement du polyéthylène. La vitesse de défilement choisie est de l'ordre de 7 m/mn. Les entre-axes des rouleaux 9 et 10 respectivement 11 et 12 sont de 1,3 m alors que la dimension des patins dans le sens longitudinal des bandes sans fin 7 et 8 est de 0,6 m. Le stratifié ressort des bandes sans fin 7 et 8 à une température d'environ 30°C.

Bien entendu, ces paramètres peuvent être modifiés en fonction de la vitesse de production désirée ou des matières utilisées notamment.

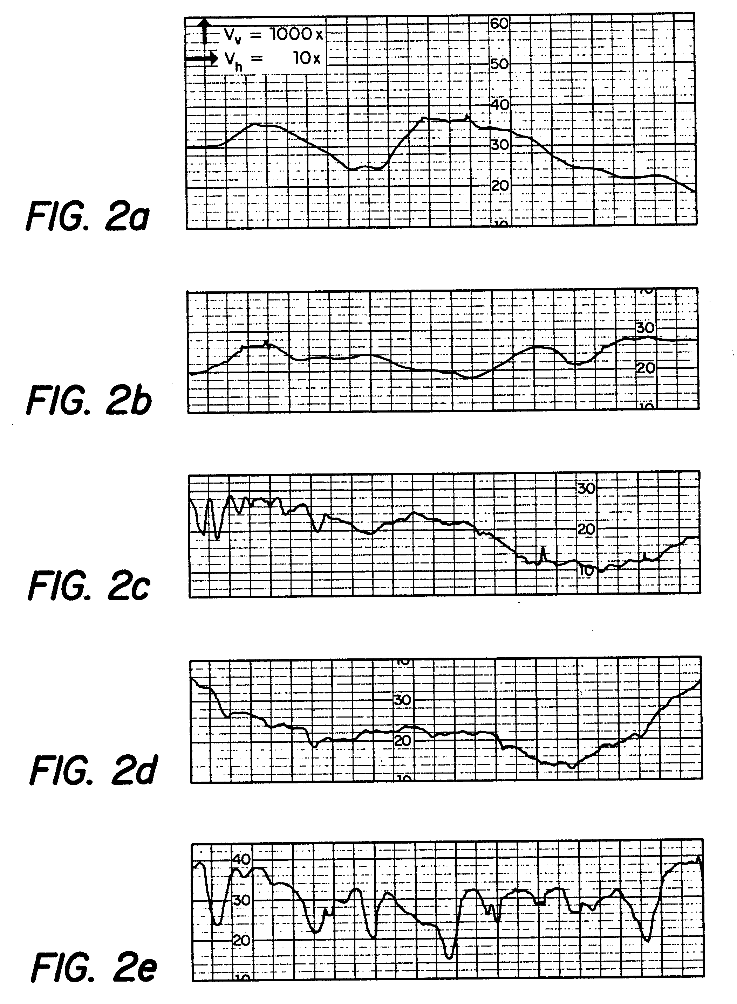

Les diagrammes illustrés par les figures 2a et 2b représentent un enregistrement de l'état de surface d'un joint plat obtenu à l'aide de l'installation et selon le procédé décrit. Ces enregistrements ont été réalisés sur un appareil de mesure «Talysurf 10» de Taylor-Hobson. L'amplification utilisée dans le sens vertical est de 1000x et dans le sens horizontal de 10x. On ne constate aucune rugosité dont le rapport vertical ou profondeur sur horizontal correspondant au déplacement à la surface de l'échantillon est supérieur à 1/200. Ces diagrammes 2a et 2b ont été enregistrés selon deux directions perpendiculaires l'une à l'autre.

Les diagrammes 2c à 2e représentent l'état de surface d'un joint plat stratifié à trois couches, identique à celui objet de la présente invention, mais réalisé par la technique de co-extrusion. Les mesures ont été réalisées respectivement selon le grand axe de l'échantillon, dans le sens des lignes d'extrusion d'une zone relativement lisse et dans le sens des lignes d'extrusion d'une zone moins lisse.

On constate sur ces trois diagrammes des rugosités dont le rapport profondeur/longueur est supérieur à 1/200 et peut atteindre jusqu'à 1/40 environ. Dans un tel cas, l'écrasement du joint n'est pas toujours suffisant pour supprimer l'irrégularité de surface, de sorte que la qualité de l'étanchéité diminue.

Bien que l'on ait décrit ici un exemple de joint trois couches formé à l'aide de films de polyéthylène, on peut également réaliser des joints trois couches à l'aide de films d'autres matières en utilisant le même procédé et la même installation. On peut utiliser en général tous les matériaux thermo-plastiques thermo-soudables sur du polyéthylène expansé. Dans certains cas, on a constaté qu'l était préférable de réaliser le préchauffage à air en écartant le film de la feuille de polyéthylène expansé.

De même, lorsque l'on parle de films ausujet des couches 4 et 6 thermo-soudées contre les faces de la couche polyéthylène expansé, il doit être compris que ces films peuvent également être constitués de feuilles de matériaux stratifiés par exemple de Saranex® composé d'une couche de polyéthylène, d'un adhésif d'une couche d'un copolymère à base de chlorure de vinyle et de chlorure de vinlyidène, produit commercialisé sour la marque Saran®, d'un adhésif et d'une autre couche de polyéthylène. Un tel stratifié a comme avantage que la couche intermédiaire de Saran® constitue une barrière étanche au gaz. Cette feuille de matériau stratifié qui peut être placée sur une des faces seulement de la couche de polyéthylène expansé a une épaisseur de l'ordre de 50 μm.

Un autre avantage du procédé consiste à permettre de réaliser une impression sur la feuille de polyéthylène expansé 2 avant de former le stratifié, cette impression étant parfaitement lisible à travers les films 4 et 6 ou seulement l'un d'eux si l'impression n'est faite que sur une face de la feuille 2. Comme le polyéthylène expansé n'est pas suffisamment chauffé durant le processus de fabrication pour être déformé, l'impression ne subit pas davantage de déformation que son support.

Le matériau stratifié selon l'invention peut également être utilisé à d'autres fins que les joints plats. La possibilité d'impression permet de réaliser des surfaces décorées en vue de produire divers articles tels que des sets de table, des bavoirs ou des tapis de bain, sans que cette énumération soit limitative.

## Revendications

1. Matériau stratifié, notamment pour réaliser un joint plat destiné à être appliqué contre l'extrémité du goulot d'un récipient comprenant au moins trois couches soit, une couche de polyéthylène expansé prise entre deux films d'un matériau thermoplastique thermo-soudable sur le polyéthylène, caractérisé par le fait que le rapport profondeur/longueur des irrégularités de surface est inférieur à 1/200.

2. Matériau stratifié selon la revendication 1, caractérisé par le fait qu'une impression est réalisée sur au moins une face de la couche de polyéthylène expansé et que cette impression est visible à travers ledit film qui recouvre cette face.

3. Procédé de fabrication d'un matériau stratifié, notamment pour réaliser un joint plat destiné à être appliqué contre l'extrémité du goulot d'un récipient, comprenant trois couches, à savoir une couche de polyéthylène expansé prise entre deux films d'un matériau thermoplastique soudable à chaud avec le polyéthylène expansé, caractérisé par le fait que l'on forme de stratifié en réunissant la couche de polyéthylène expansé entre lesdits films, que l'on chauffe ces films à leur température de ramollissement, que l'on presse le tout en le faisant défiler entre deux bandes présentant dans le lens longitudinal de leur défilement un gradient de température allant de la température de ramollissement desdites feuilles à leur température de solidification.

4. Installation pour la mise en oeuvre du procédé selon la revendication 3, caractérisée par le fait qu'elle comporte des moyens (7, 8) pour réunir et faire défiler longidutinalement un ruban stratifié comprenant un ruban de polyéthylène expansé (2) entre deux films (4, 6) de matériau thermoplastique soudable à chaud avec le polyéthylène expansé, un poste de préchauffage (23, 24) desdits films, deux bandes métalliques sans fin (7, 8) montées chacune entre deux rouleaux (9, 10; 11, 12) et dont deux brins adjacents sont parallèles et situés le long de la trajetoire du ruban stratifié, les surfaces respectives externes de ces bandes métalliques sans fin présentant le degré de poli désire pour les faces externes desdits films, des moyens de chauffage de chacun desdits rouleaux (9, 11) situés en amont par rapport au sens d'avance du ruban stratifié et deux patins de refroidissement (21, 22) en contact avec une portion de chacun desdits brins adjacents des bandes métalliques sans fin.

## Patentansprüche

1. Schichtstoff, insbesondere Flachmaterial zum Anbringen an einem Halsende eines Behältnisses, bestehend aus mindestens drei Schichten mit einer Polyethylenschicht zwischen zwei Filmen aus thermoplastischem Material, die auf die Polyethylenschicht aufgeschweisst sind, dadurch gekennzeichnet, dass das Verhältnis von Tiefe/Länge der Oberflächenunregelmässigkeiten geringer als 1/200 ist.

2. Schichtstoff nach Anspruch 1, dadurch gekennzeichnet, dass auf wenigstens einer Seite der Polyethylenschicht ein Aufdruck aufgebracht ist, und dass dieser Aufdruck durch den Film hindurch, der diese Seite bedeckt, sichtbar ist.

3. Verfahren zur Herstellung eines Schichtstoffes, insbesondere eines Flachmaterials zum Aufbringen an einem Halsende eines Behältnisses, bestehend aus drei Schichten mit einer Polyethylenschicht zwischen zwei Filmen oder Folien aus thermoplastischem Material, die mit der Polyethylenschicht heissverschweisst sind, dadurch gekennzeichnet, dass die Polyethylenschicht zwischen die Filme oder Folien gebracht wird, dass das Ganze gepresst wird, indem es zwischen zwei Bändern hindurchgeführt wird, wobei in Bewegungsrichtung ein Temperaturgradient vorhanden ist, der sich von der Erweichungstemperatur der Filme bzw. Folien bis zu iher Verfestigungstemperatur erstreckt.

4. Vorrichtung zur Ausführung der Herstellung nach Anspruch 3, gekennzeichnet durch Mittel (7, 8) zum Erhalten einer mehrschichtigen Bahn und zu ihrer Bewegung in Längsrichtung, wobei die Bahn aus einer Polyethylenbahn (2) zwischen zwei Filmem (4, 6) aus thermoplastischem Material besteht, die mit dem Polyethylen heissverschweisst sind, mit einer Vorrichtung (23, 24) zur Vorerwärmung der Filme, zwei endlosen metallischen Transportbändern (7, 8), die jeweils über zwei Rollen (9, 10; 11, 12) laufen, wobei benachbarte Abschnitte der Bänder parallel entlang der mehrschichtigen Bahn geführt sind und die äusseren Flächen dieser endlosen metallischen Bänder den gewünschten Grad der Glättung der äusseren Flächen der Filme bestimmen, Erhitzungsmitteln für jede der Rollen (9, 11) am Anfang des Bahntransports und zwei Kühlvorrichtungen (21, 22) in Kontakt mit einem Teil der benachbarten Bandabschnitte der endlosen metallischen Bänder.

## Claims

1. Laminated material, in particular for making a flat gasket to be applied against a bottle neck of a container, comprising at least three layers, i.e. one layer of expanded polyethylene sandwiched between two films of thermo-plastic material which are bound thereto by heat-welding, characterized in that the ratio of depth/length of the surface inequalities is below 1/200.

2. Laminated material according to claim 1, characterized in that an imprint is provided on at least one face of the expanded polyethylene layer and that this print is visible through said film which covers this face.

3. Method for manufacturing a laminated material, e.g. to achieve a flat gasket to be applied on the neck-end of a container, comprising three layers, i.e. one layer of expanded polyethylene sandwiched between two films of a thermo-plastic material which can be bound to the expanded polyethylene by hot-welding, characterized in that shaping of this laminate is carried out by placing the layer of expanded polyethylene between said films, heating the films to softening temperature, and pressing and moving the composite between two feeding strips provided, in the longitudinal feeding direction thereof, with a temperature gradient which decreases from the temperature of softening of said films to the solidification temperature thereof.

4. Installation for embodying the method according to claim 3, characterized in comporting means (7, 8) to assemble together and longitudinally feed a laminated ribbon comprising an expanded polyethylene ribbon (2) squeezed between two films (4, 6) of thermoplastic material to be thermally welded to the expanded polyethylene, a station (23, 24) for preheating said films, two endless metallic belts (7, 8), each being slidingly mounted between two rolls (9, 10; 11, 12) and whose two adjacent blades run in parallel with the path of the laminated ribbon, the respective external surfaces of these endless metal strips being provided with the desired level of polish or each of the external faces of said films, means for heating each of said rolls (9, 11) located upstream regarding the forward direction of the laminated ribbon and two cooling anvils (21, 22) which contact a portion of said blades of the endless strips.

FIG. 1

FIG. 2a

FIG. 2b

FIG. 2c

FIG. 2d

FIG. 2e